(19) Europäisches Patentamt
European Patent Office
Office européen des brevets

(11) **EP 4 184 376 A1**

(12) **EUROPÄISCHE PATENTANMELDUNG**

(43) Veröffentlichungstag:
**24.05.2023  Patentblatt 2023/21**

(21) Anmeldenummer: **22208830.4**

(22) Anmeldetag: **22.11.2022**

(51) Internationale Patentklassifikation (IPC):
**G06F 30/28** (2020.01)  **G01M 9/06** (2006.01)
**B64C 21/06** (2023.01)  **F15D 1/12** (2006.01)
**G01P 5/02** (2006.01)  **G01P 5/14** (2006.01)
G06F 113/08 (2020.01)  G06F 113/28 (2020.01)
G06F 119/14 (2020.01)

(52) Gemeinsame Patentklassifikation (CPC):
**G01M 9/06; B64C 21/06; F15D 1/12; G01P 5/02;**
**G01P 5/14; G06F 30/28;** G06F 2113/08;
G06F 2113/28; G06F 2119/14

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **23.11.2021  DE 102021130594**

(71) Anmelder: **Technische Universität Braunschweig**
**38106 Braunschweig (DE)**

(72) Erfinder:
• **Prof. Dr. Radespiel, Rolf**
  **38108 Braunschweig (DE)**
• **Dr. Scholz, Peter**
  **38106 Braunschweig (DE)**
• **Barklage, Alexander**
  **38106 Braunschweig (DE)**
• **Badrya, Camli**
  **38100 Braunschweig (DE)**

(74) Vertreter: **Gramm, Lins & Partner**
**Patent- und Rechtsanwälte PartGmbB**
**Freundallee 13a**
**30173 Hannover (DE)**

(54) **VERFAHREN ZUM ERMITTELN DER KONFIDENZINTERVALLE DER ABSAUGGESCHWINDIGKEIT EINES HYBRID-LAMINARISIERTEN STRÖMUNGSKÖRPERS**

(57)  Die Erfindung betrifft ein Verfahren zum Ermitteln mindestens einer Absaugeigenschaft bei einer laminaren Strömungskontrolle eines Strömungskörpers eines Flugobjektes, bei dem eine Grenzschicht an einer äußeren Strömungsoberfläche des Strömungskörpers zur laminaren Strömungskontrolle durch ein Absaugsystem während des Flugbetriebs in das Innere des Strömungskörpers abgesaugt wird, wobei das Verfahren die folgenden Schritte umfasst:
- Bereitstellen eines digitalen Strömungsmodells in einer elektronischen Datenverarbeitungsanlage, wobei das digitale Strömungsmodell eine Absaugströmung von der äußeren Strömungsoberfläche in das Innere des Strömungskörpers beschreibt;
- Bereitstellen mindestens einer Wahrscheinlichkeitsdichtefunktion für einen bestimmten Modellparameter des digitalen Strömungsmodells bezüglich des Strömungskörpers in der elektronischen Datenverarbeitungsanlage;
- Berechnen von mindestens einer Absaugeigenschaft des Strömungskörpers basierend auf dem digitalen Strömungsmodell und der mindestens einen Wahrscheinlichkeitsdichtefunktion mittels der elektronischen Datenverarbeitungsanlage, indem Werte für den mindestens einen Modellparameter, für den die Wahrscheinlichkeitsdichtefunktion bereitgestellt wurde, variiert werden.

Figur 1

**Beschreibung**

Die Erfindung betrifft ein Verfahren zum Ermitteln mindestens einer Absaugeigenschaft eines hybrid-laminarisierten Strömungskörpers eines Flugobjektes, bei dem eine Grenzschicht an einer äußeren Strömungsoberfläche des hybrid-laminarisierten Strömungskörpers durch ein Absaugsystem während des Flugbetriebs in das Innere des hybrid-laminarisierten Strömungskörpers abgesaugt wird.

Im Sinne der vorliegenden Erfindung werden unter dem Begriff "Strömungskörper" diejenigen Elemente eines Flugobjektes verstanden, die den Rumpf des Flugobjektes bilden und/oder die von dem Rumpf des Flugobjektes abstehend angeordnet sind und bei bestimmungsgemäßen Gebrauch des Flugobjektes durch Luftschichten angeströmt werden, wodurch aerodynamische Kräfte hervorgerufen werden, die auf das Flugobjekt einwirken können. So sind die Tragflügel (Tragflächen) sowie die Leitwerke (Höhenleitwerk, Seitenleitwerk) insbesondere Flügelkörper im Sinne der Erfindung. Unter einem Flugobjekt im Sinne der vorliegenden Erfindung werden insbesondere Starrflügler als auch Drehflügler verstanden.

Die Profilflächen von Strömungskörpern von Flugobjekten, wie beispielsweise Tragflächen von Verkehrsflugzeugen, besitzen zunächst grundsätzlich laminare Grenzschichten, die bei heutigen Verkehrsflugzeugen jedoch frühzeitig in turbulente Grenzschichten umschlagen. Eine solche turbulente Grenzschicht weist dabei einen deutlich erhöhten Reibungswiderstand auf als eine laminare Grenzschicht. Die Instabilität der Grenzschicht, die zum Umschlag führt, wird maßgeblich von der Druckverteilung des umströmten Körpers in Richtung der äußeren Umströmung und quer dazu beeinflusst. Die Instabilität der Grenzschicht wird weiterhin auch durch Formabweichungen, wie sie Lücken, Stufen und/oder Wellen der Kontur der aerodynamischen Oberfläche darstellen, begünstigt. Daher besteht grundsätzlich die Bestrebung, durch eine entsprechende Form der Profilflächen von Strömungskörpern den Umschlag von der laminaren Grenzschicht in eine turbulente Grenzschicht möglichst lange hinauszuzögern.

Es ist dabei bekannt, zur möglichst langen Aufrechterhaltung der laminaren Grenzschicht mithilfe eines Absaugsystems, welches in dem Flugobjekt angeordnet ist, einen Teil der Grenzschicht an der äußeren Strömungsoberfläche abzusaugen. Hierdurch wird der insbesondere frühzeitige Umschlag der laminaren Grenzschicht in die turbulente Grenzschicht vermieden und es wird eine möglichst langanhaltende laminare Umströmung des Strömungskörpers realisiert. Strömungskörper, diese wodurch eine Formgebung als auch durch ein aktives Absaugsystem eine laminare Umströmung erzielen wollen, werden dabei als hybrid-laminarisierte Strömungskörper bezeichnet.

Bei einem solchen aktiven Absaugsystem weist die äußere Oberfläche des Strömungskörpers, insbesondere im Bereich der angeströmten Vorderkante, eine Perforation auf, durch die eine Durchlässigkeit in das Innere des Strömungskörpers eingerichtet wird. Diese durch die Perforation eingerichteten Durchlässe münden dabei in entsprechenden Absaugkammern, die mithilfe einer Saugpumpe oder durch die Ausnutzung eines Orts mit natürlichem Unterdruck am Strömungskörper mit einem Unterdruck beaufschlagt werden. Durch diesen Unterdruck in den Absaugkammern, die wiederum über die Perforation mit der Grenzschicht an der äußeren Strömungsoberfläche kommunizierenden Verbindung stehen, wird ein Teil der laminaren Grenzschicht in die Absaugkammer eingesaugt.

Die laminare Strömungskontrolle durch aktive Grenzschichtabsaugung ermöglicht durch die Absaugung der Grenzschicht die Laminarhaltung der Grenzschicht und trägt somit zu einem sehr geringen Reibungswiderstand bei. Hierfür ist die Absauggeschwindigkeit ein maßgebender Parameter, der aber nicht direkt gemessen werden kann. Daher werden bei der Konstruktion und Planung derartiger hybrid-laminarisierter der Strömungskörper relativ große Unsicherheitsmargen vorgesehen, die die Wirtschaftlichkeit des Absaugsystems beeinträchtigen. Diese Unsicherheiten mindern ferner den Wert von aufwendigen Windkanaluntersuchungen während der Entwicklung des Absaugsystems. Zudem erschweren diese Unsicherheiten die Qualitätskontrolle in der Fertigung und die Funktionskontrolle während der Wartung und Überprüfung beim Betrieb der Systeme.

Es ist daher Aufgabe der vorliegenden Erfindung ein verbessertes Verfahren anzugeben, mit dem die Absauggeschwindigkeiten oder abgeleitete Eigenschaften hiervon so präzise vorherbestimmt werden können, dass die eingeplanten Unsicherheitsmargen möglichst gering sind.

Die Aufgabe wird mit dem Verfahren gemäß Anspruch 1 erfindungsgemäß gelöst. Vorteilhafte Ausgestaltungen der Erfindung finden sich in den entsprechenden Unteransprüchen.

Verfahren zum Ermitteln mindestens einer Absaugeigenschaft bei einer laminaren Strömungskontrolle eines Strömungskörpers eines Flugobjektes, bei dem eine Grenzschicht an einer äußeren Strömungsoberfläche des Strömungskörpers zur laminaren Strömungskontrolle durch ein Absaugsystem während des Flugbetriebs in das Innere des Strömungskörpers abgesaugt wird

Gemäß Anspruch 1 wird ein Verfahren zum Ermitteln mindestens einer Absaugeigenschaft bei einer laminaren Strömungskontrolle eines Strömungskörpers eines Flugobjektes vorgeschlagen, bei dem zumindest ein Teil einer Grenzschicht an einer äußeren Strömungsoberfläche des Strömungskörpers zur laminaren Strömungskontrolle durch ein Absaugsystem während des Flugbetriebs in das Innere des Strömungskörpers abgesaugt wird. Bei einem solchen Strömungskörper kann es sich um einen hybrid-laminarisierten Strömungskörper handeln.

Typische Saugstromanwendungen bestehen aus einer einzelnen oder mehreren Saugkammern. Die Kammern arbeiten mit einem Druck, der niedriger ist als der statische Druck der Außenhaut. Die Kammern können über Drosselbohrungen mit einem oder mehreren Rohren verbunden sein, die den Saugstrom mit der Saugpumpe verbinden. Die Saugpumpe hat die Aufgabe, einen vorgegebenen Druck in den Saugkammern oder einen vorgegebenen Saugmassenstrom aufrechtzuerhalten.

Es wird zunächst ein digitales Strömungsmodell in einer elektronischen Datenverarbeitungsanlage bereitgestellt, welches ein physikalisches Modell des Absaugstromes darstellt und eine Absaugströmung von der äußeren Strömungsoberfläche in das Innere des Strömungskörpers beschreibt. Damit soll die Absaugströmung von der äußeren Strömungsoberfläche durch die Perforation der Außenseite des Strömungskörpers in das Innere des Strömungskörpers physikalisch beschrieben werden.

Ein geeignetes Strömungsmodell, das rechnerisch effizient und (in vielen Fällen) hinreichend genau ist, ist die Stromfadentheorie für inkompressible Strömungen. Die aerodynamische Oberfläche wird in eine beliebig große Anzahl von Feldern unterteilt, und jeder der Strömungsströme durch die einzelnen Felder wird durch ein Strömungsfilament modelliert. Bei bekanntem Außendruck und Kammerdruck kann die durchschnittliche Absauggeschwindigkeit berechnet werden. Die Strömungsfadentheorie kann auch auf ein System von Fäden angewandt werden, die durch zwischengeschaltete Drosselbohrungen oder zusätzliche Gebläse pneumatisch gekoppelt sind.

Wenn die Absauggeschwindigkeiten in den durch die Perforation eingerichteten Durchlässen relativ zur lokalen Schallgeschwindigkeit signifikant sind, kann die inkompressible Version der Stromfadentheorie durch die kompressible Variante der Stromfadentheorie ersetzt werden. Wenn die Saugströmung so komplex ist, dass sie nicht mehr durch die Stromfadentheorie modelliert werden kann, muss sie durch numerische Simulationen der Navier-Stokes-Gleichung modelliert werden, entweder mittels der Reynolds-Mittelung oder unter Verwendung von Large Eddy Simulation (LES) oder durch die Direkte Numerische Simulation (DNS).

Des Weiteren wird mindestens eine Wahrscheinlichkeitsdichtefunktion für einen bestimmten Modellparameter des digitalen Strömungsmodells bezüglich des Strömungskörpers in der elektronischen Datenverarbeitungsanlage bereitgestellt,

Hierfür ist es erforderlich, dass die Parameter des Strömungsmodells definiert sind. Dies betrifft insbesondere die Eingangsparameter sowie die Modellparameter des Modells. Die Parameter des Strömungsmodells müssen dabei so definiert werden, dass sie die relevante Strömungsphysik bei der Absaugung der Grenzschicht an der äußeren Strömungsoberfläche in Bezug zu der Vormundgeometrie des betrachteten Strömungskörpers nach Möglichkeit vollständig beschreiben. Bei den Eingangsparametern kann es sich beispielsweise um eine oder mehrere Kenngrößen des äußeren Strömungsfeldes an der äußeren Strömungsoberfläche handeln. Die Modellparameter umfassen bspw. eine Verteilung des Druckkoeffizienten an der äußeren Strömungsoberfläche, eine Verteilung der Oberflächenpermeabilität der äußeren Strömungsoberfläche des Strömungskörpers und/oder eine Saugdruckeigenschaft des Absaugsystems.

Die Außendruckverteilung kann experimentell gemessen oder aus CFD-Simulationen bzw. durch geeignete Interpolation aus beiden Datenquellen bestimmt werden. Die Verteilung der Oberflächenpermeabilität kann durch Messung lokaler Hautdruckverluste oder durch Berechnung der Hautdruckverluste aus porösitätsauflösenden CFD-Simulationen ermittelt werden. Die Oberflächenpermeabilitätsdaten sollten die Wirkung der Außenströmung über die Haut berücksichtigen, um den Modellfehler zu minimieren.

Zur Bestimmung der Wahrscheinlichkeitsdichtefunktion für die Eingangsparameter und/oder die Modellparameter kann Expertenwissen herangezogen werden. Zum Beispiel ist der Betreiber eines Windkanals in der Regel die bevorzugte Quelle für die Definition einer soliden Wahrscheinlichkeitsdichtefunktion für die freien Strömungsgrößen der Teststrecke. In ähnlicher Weise werden Unsicherheiten in Bezug auf die Modellparameter aus Experimenten oder Simulationen durch Expertenwissen bereitgestellt.

Schließlich wird mindestens eine Absaugeigenschaft des Strömungskörpers basierend auf dem digitalen Strömungsmodell und der mindestens einen Wahrscheinlichkeitsdichtefunktion mittels der elektronischen Datenverarbeitungsanlage berechnet, indem Werte für den mindestens einen Modellparameter, für den die Wahrscheinlichkeitsdichtefunktion bereitgestellt wurde, variiert werden.

Eine statistische Analyse der Sauggeschwindigkeitsausgabe liefert die erforderlichen Daten der lokalen Sauggeschwindigkeit mit maximaler Wahrscheinlichkeit, den Mittelwert der Sauggeschwindigkeit und/oder seine statistischen Momente und Konfidenzintervalle.

Mithilfe der vorliegenden Erfindung wird es möglich, die durch die zahlreichen Unsicherheitsquellen in Experimenten und Simulationen verursachten Unsicherheiten der lokalen Absauggeschwindigkeiten zu quantifizieren, um so auf pauschale Unsicherheitsmargen beim Entwurf des Absaugsystems verzichten zu können. Darüber hinaus wird es mit der vorliegenden Erfindung möglich, bei der Qualitätskontrolle in der Fertigung sowie der Funktionskontrolle während der Wartung Aussagen über die Güte des Absaugsystems zu treffen und hinsichtlich der Zertifizierung derartiger Systeme einen Beitrag zu leisten.

Gemäß einer Ausführungsform ist vorgesehen, dass als Modellparameter ein oder mehrere Kenngrößen des äußeren Strömungsfeldes an der äußeren Strömungsoberfläche, eine Verteilung des Druckkoeffizienten an der äußeren Strömungsoberfläche, eine Verteilung der Oberflächenpermeabilität der äußeren Strömungsoberfläche des Strömungskörpers und/oder eine Saugdruckeigenschaft des Absaugsystems verwendet werden.

Gemäß einer Ausführungsform ist vorgesehen, dass ein Kammerdruck einer Absaugkammer des Absaugsystems als eine Saugdruckeigenschaft des Absaugsystems und/oder eine Kenngröße für den Massestrom des Absaugsystems als eine Saudruckeigenschaft des Absaugsystems verwendet wird.

Gemäß einer Ausführungsform ist vorgesehen, dass eine Monte-Carlo-Simulation für den mindestens einen Modellparameter, für den die Wahrscheinlichkeitsdichtefunktion bereitgestellt wurde, durchgeführt wird.

Für rechnerisch kostengünstige Saugströmungsmodelle wie die Stromfadentheorie ist der einfachste Ansatz die Monte-Carlo-Simulation, bei der alle Eingangs- und Modellparameter stochastisch variiert werden und die Reaktion der resultierenden Saugströmungsgeschwindigkeit abgetastet und analysiert wird. Auf diese Weise wird die Wahrscheinlichkeitsdichtefunktion aller beteiligten Parameter durch das Modell übertragen.

Für rechenintensive Saugströmungsmodelle wie Lösungen der Navier-Stokes-Gleichungen kann bspw. die Theorie des verallgemeinerten polynomialen Chaos mit multivariaten orthogonalen Polynomen angewendet werden, um ein Ersatzmodell des Modellübertragungsverhaltens für probabilistische Parameter aufzustellen. In diesem Fall kann ein sog. Surrogatmodell eine recheneffiziente Abtastung ermöglichen.

Gemäß einer Ausführungsform ist vorgesehen, dass als digitales Strömungsmodell ein Strömungsmodell basierend auf der Stromfadentheorie oder ein Strömungsmodell basierend auf den Navier-Strokes-Gleichungen bereitgestellt wird.

Gemäß einer Ausführungsform ist vorgesehen, dass für die Modellparameter jeweils ein Parameterwert bereitgestellt wird, der zuvor aus einer numerischen Simulation und/oder aus einer sensorbasierten Messung ermittelt wurde, wobei die mindestens eine Wahrscheinlichkeitsdichtefunktion des entsprechenden Modellparameters auf dem bereitgestellten Parameterwert basiert.

Gemäß einer Ausführungsform ist vorgesehen, dass als Absaugeigenschaft eine Unsicherheitsquantifizierung der lokalen Absauggeschwindigkeiten, insbesondere ein Konfidenzintervall der Absauggeschwindigkeiten, berechnet wird.

Die Aufgabe wird auch mit dem Computerprogramm gemäß Anspruch 8 erfindungsgemäß gelöst.

Die Aufgabe wird auch mit der Vorrichtung zum Ermitteln mindestens einer Absaugeigenschaft eines Strömungskörpers eines Flugobjektes gemäß Anspruch 9 erfindungsgemäß gelöst.

Die Erfindung wird anhand der beigefügten Figuren beispielhaft näher erläutert. Es zeigen:

Figur 1    Schematische Darstellung eines Ausschnittes eines Strömungskörper-Querschnittes

Figur 2    Schematische Darstellung eines Verfahrensablaufes.

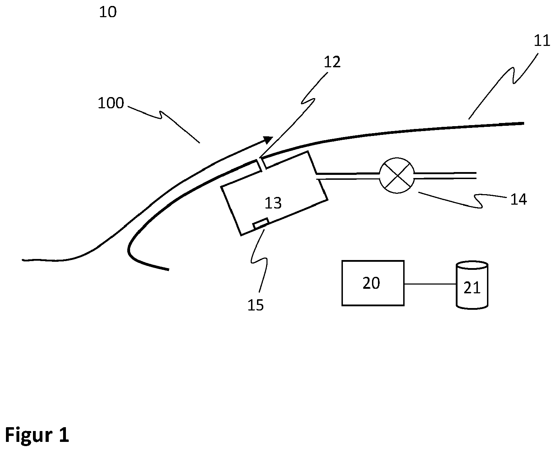

Figur 1 zeigt schematischen einer stark vereinfachten Darstellung den Ausschnitt eines Strömungskörper-Querschnittes eines Strömungskörpers 10, der eine äußere Strömungsoberfläche 11 besitzt, die im Flugbetrieb von einer äußeren Strömung 100 aerodynamisch angeströmt wird. In der äußeren Strömungsoberfläche 11 befinden sich eine Mehrzahl von Öffnungen 12, von denen lediglich eine aus Übersichtlichkeitsgründen dargestellt ist. Durch diese Öffnungen 12 wird die äußere Strömungsoberfläche 11 für das umströmende Fluid 100 permeabel.

Jede dieser Öffnungen 12 steht dabei mit einer Absaugkammer 13 kommunizierend in Verbindung, wobei mehrere Öffnungen 12 mit einer gemeinsamen Absaugkammer 13 in Verbindung stehen können. Auch ist denkbar, dass mehrere Absaugkammer 13 vorgesehen sind. Mithilfe einer Vakuumpumpe bzw. Unterdruckpumpe 14, die mit der Absaugkammer 13 in Verbindung steht, wird ein Unterdruck in der Absaugkammer 13 erzeugt, um das äußere Strömungsfluid 100 durch die jeweilige Öffnung 12 in die Absaugkammer 13 ein saugen zu können. Hierdurch wird zumindest ein Teil der Grenzschicht an der äußeren Strömungsoberfläche 11 der Strömung 100 in das Innere des Strömungskörpers 10 abgesaugt und dann über einen Auslass an einer geeigneten Stelle des Flugobjektes in die Umgebung ausgeströmt, so dass hierdurch eine langanhaltende laminare Grenzschicht erreicht wird.

Im Inneren der Absaugkammer 13 befindet sich ein Drucksensor 15, der den Innendruck der Absaugkammer 13 während des beaufschlagten Unterdruckes erfassen kann. Denkbar ist auch, dass mithilfe eines geeigneten Sensors der Massestrom zwischen Absaugkammer 13 und Unterdruckpumpe 14 gemessen wird, der ebenfalls in die Ermittlung einer Absaugeigenschaft einfließen kann.

Der Drucksensor 15 steht dabei mit einer elektronischen Datenverarbeitungsanlage 20 kommunizierend in Verbindung, um die von dem Drucksensor 15 erfassten Datenwerte aufnehmen zu können. Über die an die Datenverarbeitungsanlage 20 angeschlossene Datenbank 21 wird der Datenverarbeitungsanlage 20 ein physikalisches Strömungsmodell bereitgestellt. Mithilfe der Datenbank 21 können des Weiteren die bereits vorgefertigten Wahrscheinlichkeitsdichtefunktionen bereitgestellt werden. Die erfassten Druckwerte in der Absaugkammer 13 dienen dabei als Eingangsparameter in das physikalische Strömungsmodell. Auch Werte hinsichtlich der Temperatur und der Feuchtigkeit werden erfasst und durch das Strömungsmodell berücksichtigt.

Als Ergebnis liefert die Datenverarbeitungsanlage 20 beispielsweise ein Konfidenzintervall der Absauggeschwindigkeiten, was beispielsweise während des Fluges erfolgen kann. Auch kann eine solche Überprüfung während der Qualitätssicherung oder während Wartungsmaßnahmen oder Reparatur durchgeführt werden.

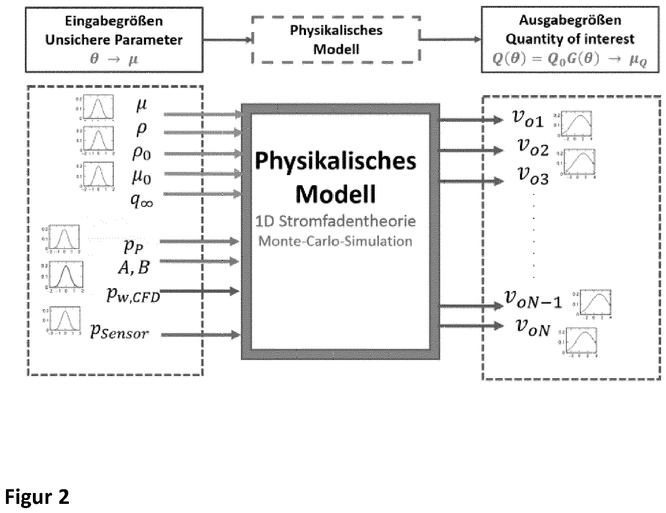

Figur 2 zeigt in einer schematischen Darstellung den Ablauf Verfahrens. Zentrales Element ist das physikalische Modell, welches beispielsweise auf der Stromfadentheorie beruht, aber wie oben erläutert auch durch rechenintensivere Modelle ersetzt werden kann. Wird die Stromfadentheorie benutzt, kann die Druckdifferenz über die permeable Außenfläche und ggfs. mögliche weitere vorhandene Drosselbohrungen als Kombination aus linearen und quadratischen Geschwindigkeitsanteilen beschrieben werden

$$ p_w - p_P = \sum_i A_i v_i + \sum_i B_i v_i^2 \,, $$

wobei $p_w$ den Druck auf der äußeren Fläche des Strömungskörpers und $p_P$ den Druck an der Stelle des Drucksensors 15 aus Figur 1 bezeichnen. Die Parameter $A_i$ und $B_i$ können beispielsweise aus Durchflussmessungen an der permeablen Außenfläche gewonnen werden. Um eine Gleichung in Abhängigkeit der Absauggeschwindigkeit zu erhalten, müssen die einzelnen Geschwindigkeiten $v_i$ über die Kontinuitätsgleichung in ein Verhältnis gesetzt werden ($v_s = f(v_i)$). Damit erhält man dann eine Gleichung der Form

$$ p_w - p_P = f(\theta, v_s, v_s^2) \,, $$

wobei $\theta$ alle Anteile der Parameter $A_i$ und $B_i$ zusammenfasst und $v_s$ die Absauggeschwindigkeit darstellt. Diese quadratische Gleichung kann dann nach der gesuchten Absauggeschwindigkeit $v_s$ umgestellt werden.

Die Gleichung für die Absauggeschwindigkeit enthält auf der rechten Seite Parameter, die allesamt mit Unsicherheiten behaftet sind. Dies ist auf der linken Seite in Figur 2 illustriert. Der Wanddruck $p_w$ wird in diesem Beispiel aus einer Kombination von Druckmessungen ($p_{Sensor}$) und CFD-Simulationen ($p_{CFD}$) erhalten und unterliegt daher Messfehlern sowie Ungenauigkeiten der Simulationen. Ebenso besitzt der gemessene Druck des Sensors im Plenum ($p_P$) Messfehler. Einen weiteren Einfluss auf den Druckterm hat der gemessene Referenzdruck $q_\infty$, der zur Normierung des Drucks benutzt wird und ebenfalls eine Messunsicherheit hat. Zudem unterliegen die Parameter $A$ und $B$ nicht zu vernachlässigenden Unsicherheiten, da diese teilweise eine starke lokale Variation aufweisen. Schlussendlich zeigen die Parameter $A$ und $B$ noch eine Abhängigkeit von der Viskosität ($\mu_0, \mu$) und der Dichte ($\rho_0, \rho$), die über Druck und Temperaturmessungen erhalten werden, die Messfehler beinhalten. Alle diese Unsicherheiten werden statistisch modelliert, was beispielsweise durch eine einfache Normalverteilung oder durch komplexe Gauß Prozesse geschieht.

Mithilfe einer Monte-Carlo-Simulation können Unsicherheiten in den Absauggeschwindigkeiten aus den so modellierten Unsicherheiten der Parameter bestimmt werden. In jeder Iteration der Monte-Carlo-Simulation wird eine Stichprobe der Parameter gemäß ihrer Wahrscheinlichkeitsdichteverteilung gezogen und die Absauggeschwindigkeiten mit dem physikalischen Modell berechnet. Mit einer genügend groß gewählten Anzahl an Monte-Carlo Iterationen kann die Wahrscheinlichkeitsdichte der Absauggeschwindigkeiten, wie in Figur 2 rechts dargestellt, angenähert werden. Daraus können dann beispielsweise statistische Momente und Konfidenzintervalle berechnet werden. Zudem kann der integrale Massenstrom durch die permeable Oberfläche berechnet werden und zur Validierung der Berechnung oder zur Kalibrierung unbekannter Parameter mit einem gemessenen Massenstrom verglichen werden.

**Patentansprüche**

1. Verfahren zum Ermitteln mindestens einer Absaugeigenschaft bei einer laminaren Strömungskontrolle eines Strömungskörpers (10) eines Flugobjektes, bei dem zumindest ein Teil einer Grenzschicht an einer äußeren Strömungsoberfläche (11) des Strömungskörpers (10) zur laminaren Strömungskontrolle durch ein Absaugsystem während des Flugbetriebs in das Innere des Strömungskörpers (10) abgesaugt wird, wobei das Verfahren die folgenden Schritte umfasst:

- Bereitstellen eines digitalen Strömungsmodells in einer elektronischen Datenverarbeitungsanlage (20), wobei das digitale Strömungsmodell eine Absaugströmung von der äußeren Strömungsoberfläche (11) in das Innere des Strömungskörpers (10) beschreibt;
- Bereitstellen mindestens einer Wahrscheinlichkeitsdichtefunktion für einen bestimmten Modellparameter des digitalen Strömungsmodells bezüglich des Strömungskörpers (10) in der elektronischen Datenverarbeitungsanlage (20);
- Berechnen von mindestens einer Absaugeigenschaft des Strömungskörpers (10) basierend auf dem digitalen Strömungsmodell und der mindestens einen Wahrscheinlichkeitsdichtefunktion mittels der elektronischen Datenverarbeitungsanlage (20), indem Werte für den mindestens einen Modellparameter, für den die Wahrscheinlichkeitsdichtefunktion bereitgestellt wurde, variiert werden.

2.  Verfahren Anspruch 1, **dadurch gekennzeichnet, dass** als Modellparameter ein oder mehrere Kenngrößen des äußeren Strömungsfeldes an der äußeren Strömungsoberfläche (11), eine Verteilung des Druckkoeffizienten an der äußeren Strömungsoberfläche (11), eine Verteilung der Oberflächenpermeabilität der äußeren Strömungsoberfläche (11) des Strömungskörpers (10) und/oder eine Saugdruckeigenschaft des Absaugsystems verwendet werden.

3.  Verfahren nach Anspruch 2, **dadurch gekennzeichnet, dass** ein Kammerdruck einer Absaugkammer (13) des Absaugsystems als eine Saugdruckeigenschaft des Absaugsystems und/oder eine Kenngröße für den Massestrom des Absaugsystems als eine Saudruckeigenschaft des Absaugsystems verwendet wird.

4.  Verfahren nach einem der vorhergehenden Ansprüche, **dadurch gekennzeichnet, dass** eine Monte-Carlo-Simulation für den mindestens einen Modellparameter, für den die Wahrscheinlichkeitsdichtefunktion bereitgestellt wurde, durchgeführt wird.

5.  Verfahren nach einem der vorhergehenden Ansprüche, **dadurch gekennzeichnet, dass** als digitales Strömungsmodell ein Strömungsmodell basierend auf der Stromfadentheorie oder ein Strömungsmodell basierend auf den Navier-Strokes-Gleichungen bereitgestellt wird.

6.  Verfahren nach einem der vorhergehenden Ansprüche, **dadurch gekennzeichnet, dass** für die Modellparameter jeweils ein Parameterwert bereitgestellt wird, der zuvor aus einer numerischen Simulation und/oder aus einer sensorbasierten Messung ermittelt wurde, wobei die mindestens eine Wahrscheinlichkeitsdichtefunktion des entsprechenden Modellparameters auf dem bereitgestellten Parameterwert basiert.

7.  Verfahren nach einem der vorhergehenden Ansprüche, **dadurch gekennzeichnet, dass** als Absaugeigenschaft eine Unsicherheitsquantifizierung der lokalen Absauggeschwindigkeiten, insbesondere ein Konfidenzintervall der Absauggeschwindigkeiten, berechnet wird.

8.  Computerprogramm mit Programmcodemitteln eingerichtet zur Durchführung des vorstehenden Verfahrens, wenn das Computerprogramm auf einer Datenverarbeitungsanlage (20) ausgeführt wird.

9.  Vorrichtung zum Ermitteln mindestens einer Absaugeigenschaft bei einer laminaren Strömungskontrolle eines Strömungskörpers (10) eines Flugobjektes eingerichtet zur Durchführung des Verfahrens gemäß einem der Ansprüche 1 bis 7.

10

11

100

12

13

14

15

20

21

**Figur 1**

**Figur 2**

EP 4 184 376 A1

Europäisches
Patentamt

European
Patent Office

Office européen
des brevets

**EUROPÄISCHER RECHERCHENBERICHT**

Nummer der Anmeldung

**EP 22 20 8830**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 114671 A1 (DEUTSCH ZENTR LUFT & RAUMFAHRT [DE]) 3. Januar 2019 (2019-01-03) | 4,5 | INV. G06F30/28 G01M9/06 |
| Y | * Absätze [0002] – [0003], [0021] – [0022]; Anspruch 1 * * das ganze Dokument * ----- | 1-3,6-9 | B64C21/06 F15D1/12 G01P5/02 G01P5/14 |
| X | Rosic Bojana V ET AL: "BOJANA STOCHASTIC DESCRIPTION OF AIRCRAFT SIMULATION MODELS AND NUMERICAL APPROACHES INFORMATIKBERICHT 2014-01 INSTITUTE OF SCIENTIFIC COMPUTING CARL-FRIEDRICH-GAUSS-FAKUL AT", , 1. Januar 2014 (2014-01-01), XP093039268, Gefunden im Internet: URL:https://leopard.tu-braunschweig.de/ser vlets/MCRFileNodeServlet/dbbs_derivate_000 33677/Rosic_Bericht_2014a.pdf [gefunden am 2023-04-14] | 4,5 | ADD. G06F113/08 G06F113/28 G06F119/14 |
| Y | * Zusammenfassung * * Seite 7, Absatz 1 * * Teil 4.1; Seiten 16-17; Abbildungen 5-7 * * Seite 15, letzter Absatz * * Abbildungen 5,6-7,10-15 * * Abbildung 21 * * Gleichungen (14)-(16) * * das ganze Dokument * ----- -/-- | 1,6-9 | **RECHERCHIERTE SACHGEBIETE (IPC)** G06F G01M B64C F15D G01P |

Der vorliegende Recherchenbericht wurde für alle Patentansprüche erstellt

| Recherchenort | Abschlußdatum der Recherche | Prüfer |
|---|---|---|
| München | 14. April 2023 | Dapp, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

**EP 22 20 8830**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Lecordix J L ET AL: "Hybrid Laminar Flow Nacelle Design", , 1. Januar 1996 (1996-01-01), XP093039270, Gefunden im Internet: URL:https://www.icas.org/ICAS_ARCHIVE/ICAS1996/ICAS-96-2.3.4.pdf [gefunden am 2023-04-14] * Zusammenfassung * * Abbildungen 2,3,8 * * Seite 512, rechte Spalte, letzter Absatz; Abbildung 15 * * das ganze Dokument * ----- | 2,3 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 14. April 2023 | Dapp, Wolfgang |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 20 8830

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2023

| Im Recherchenbericht angeführtes Patentdokument | Datum der Veröffentlichung | Mitglied(er) der Patentfamilie | Datum der Veröffentlichung |
|---|---|---|---|
| DE 102017114671 A1 | 03-01-2019 | DE 102017114671 A1<br>FR 3068331 A1 | 03-01-2019<br>04-01-2019 |

Für nähere Einzelheiten zu diesem Anhang : siehe Amtsblatt des Europäischen Patentamts, Nr.12/82

EPO FORM P0461